# EUROPEAN PATENT SPECIFICATION

(11) **EP 4 195 919 B1**
(45) Date of publication and mention of the grant of the patent: **23.10.2024**
(21) Application number: 21770324.8
(22) Date of filing: 17.08.2021
(51) Int. Cl.: A01K 63/04

(54) **A BREEDING FARM FOR FISH AND OTHER LIVING AQUATIC ORGANISMS**
EINE ZUCHTFARM FÜR FISCHE UND ANDERE LEBENDE WASSERORGANISMEN
UNE FERME D'ÉLEVAGE DE POISSONS ET D'AUTRES ORGANISMES AQUATIQUES VIVANTS

(30) Priority: 17.08.2020 NO 20200907
(43) Date of publication of application: 21.06.2023
(60) Divisional application: 24182037.2
(73) Proprietor: Alvestad AS, 0154 Oslo (NO)
(72) Inventor: ALVESTAD, Runar, 0362 OSLO (NO)
(74) Representative: AWA Norway AS
(86) International application number: PCT/NO2021/050177
(87) International publication number: WO 2022/039601

(56) References cited:
- JP-A- H07 255 321
- NO-L- 20 070 631

## Description

### TECHNICAL FIELD

The present invention relates to a breeding farm for fish and other living organisms with a new system for mechanical removal of foam and particles.

### BACKGROUND OF THE INVENTION

In the fish farming industry, there is a need for treatment of large amounts of water. This is especially true for aquaculture industries that are operated in closed facilities (lakes, tanks, etc.).

Water quality and water properties in such facilities are crucial for the viability of the organisms/fish and to achieve high production capacity. In this connection, the term fish farming includes breeding of fish and other aquatic organisms.

It is therefore also crucial to have different treatment processes to keep desired properties constant throughout the farming process. When treating water where processes such as blowing in air/oxygen are involved or which include a water level jump, a certain amount of foam will always be formed. This is especially true in fish farms that use salt water. The water level jump can be very small, e.g. that the water flows over an edge and down into a pool just below - for example in a microfilter or similar. In facilities for reusing water where the water in the tanks is pumped through an aerator, there will also be such a water level jump where water flows down into a surface. Such water level jumps cannot be avoided and are absolutely necessary to achieve what you want with the water treatment itself. When it comes to fish farming in seawater, the actual foaming is caused by the physical/chemical properties of the seawater and is due to small gas bubbles, which easily form in water with more than approx. 15 per mil salt, binding to small particles and partially dissolved substances (organic pollution) in the water. Larger and more stable bubbles can form which settle on the water surface like a foam. The formation of foam is therefore a cleaning process in itself in that the foam takes impurities out of the water. Removal of foam separately will therefore be able to help purify the farming water.

When aerating water for reuse with the current aeration system, installed at seawater tanks, a lot of foam can form inside the aerator, sometimes even into aeration zones and this will affect the aeration effect. In addition, the foam will come out of the aerator at the top when it is filled up with water for cleaning, and it settles on the surface in the farming vessels.

In addition, there is not necessarily a constant foaming in such plants. The different phases of fish farming (feeding, starvation, etc.) change the water properties and as a result, the amount of foam that is formed. There is therefore a need for a foam removal system that can be adapted to these changes. For example, it has been observed that in periods with little feeding of fish, more foam will form than in periods of feeding.

As of today, defoamers/surfactants are the only industrially used solution. Defoamers can be silicone-based chemicals that change the surface tension of water, and they are widely used in industry in various processes. Oils and oil mixtures with hydrophobic particles are also widely used in various technologies and consumer products to control foaming and foam stability. There are many types of these remedies that are approved for food use. By using such foam dampers, it is possible to control the problems of foam formation in the fishing vessels quite well. Of course, there will be something you have to find good routines for, both in terms of dosage and regulations in relation to the different phases of fish farming.

There are mainly two types of defoamers, namely "fast" and "slow" agents that are different in their effect. "Fast" defoamers are capable of destroying foam films in the early stages of film reduction. As a result, "fast" defoamers completely destroy the foam in less than a minute in a typical foam stability test. Microscopic observations have shown that "rapid" defoamers destroy the foam surface by so-called "bridging mechanisms" which involve the formation of oil bridges between two surfaces in the foam film. The stability/instability of such oil bridges is calibrated using capillary theory.

In contrast, the oil beads in the "slow" defoamers are unable to penetrate the surfaces of the foam film and are first pressed into "plateau boundaries" (PB). Only after being pressed together at the tapered walls of PB (due to water removal from the foam), the beads of the "late" antifoam agents are able to penetrate into the solution surface and destroy the adjacent foam films. Typically, the foam destruction process of the "slow" defoamers requires much longer time, in the order of minutes or tens of minutes, and residual foam of well-defined height is observed in foam experiments with such agents.

However, the use of large amounts of defoamers is not in itself desirable. It is expensive and not environmentally friendly. Improved solutions are needed.

From international patent application WO2004017726 there is known an aquaculture tank with a device for aerating the water in the tank, as well as a protein skimmer which removes the foam which is formed. Also NO20070631 L and WO2005/074675 disclose a fish farm, which removes foam.

Other current techniques appear from the patent documents NO325025, NO329300, US5200081 and CN106608673.

### SUMMARY OF THE INVENTION

It is an object of the present invention to provide a fish farm which is adapted to remove foam from the process water in an efficient manner and without the addition of chemical defoamers to the water. This is achieved with a fish farm according to the following patent claims.

The present invention relates to a foam trap for collecting foam which is removed from an aeration system by vacuum, wherein the foam is mechanically guided by means of a rotating impeller towards one or more extraction points connected to the outer periphery of the aeration system, the impeller having a buoyancy at the water surface the aeration system, where the impeller rotation is hydraulically driven by falling water supplied in the upper zone of the aeration system, where the falling water is split into droplets in an aeration medium before hitting the impeller, where the impeller blades have a twist causing one-way rotation as the falling water droplets strike/runs off the leaves. As an alternative, foam can also be sucked out of a vessel where fish are kept by using a V or U shaped surface skimmer in the vessel, where the skimmer has a design which collects foam from the vessel in front of the skimmer, where the skimmer has one or more openings, where the opening (s) are connected to the foam trap, where vacuum is used to suck the foam from the front edge of the skimmer and to the foam trap.

### BRIEF DESCRIPTION OF THE DRAWINGS

Figure 1 is a sketch of a foam trap system installed on an aeration tank that aerates the water in a seawater vessel,
Figure 2 is a detailed sketch of an impeller or paddle arranged in the aeration tank,
Figure 3 is a detailed sketch of the extraction device,
Figure 4 is a sketch of a foam trap system installed on an aeration tank that aerates the water in a seawater vessel, with a floating skimmer, and
Figure 5 is a detailed sketch of a design of the liquid skimmer.

### DETAILED DESCRIPTION

The invention will be described in more detail below with reference to the accompanying figures.

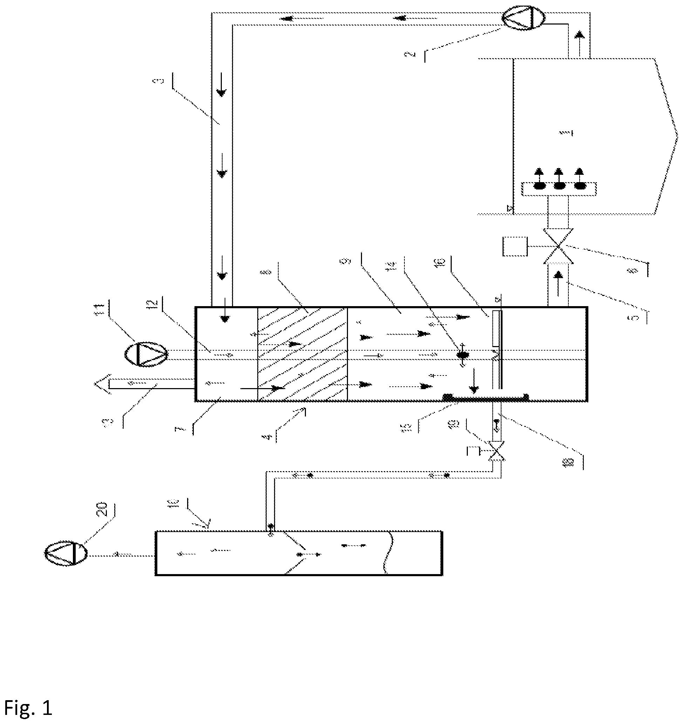

Fig. 1 shows a first version of the system comprising a breeding tank or vessel 1. Water is taken out of the breeding vessel with a pump 2 and led via a pipe 3 to an aeration tank 4. The water trickles down through the aeration tank 4 where gas is supplied, see below, and forms foam, whereupon it is returned to the breeding vessel via the pipe 5 with the valve 6. The foam formed in the aeration tank is discharged and conducted to a foam trap 10, where it is broken down.

The aeration tank comprises three zones: an upper zone 7 where the water from the breeding vessel enters, a middle zone 8 which contains an aerating medium, and a lower zone 9 where the water is collected before it is returned to the breeding vessel.

The aerating medium in the middle zone 7 may consist of coarsely crushed stone lying on a grate and through which the water trickles. Alternatively, the aerating medium may consist of small bodies of ceramic or glass. The bodies can, for example, be designed as rings or spheres. In the lower zone there is an inlet for gas (not shown). The gas can be CO₂, air or oxygen, and there is a counter-current mass exchange between the gas and the water as it trickles through the aerating medium. The aerating medium provides a large surface area between the gas and the water.

In the embodiment in Fig. 1, a fan 11 is arranged on top of the aeration tank 4. The fan 11 is connected to a pipe 12 which goes down through the tank and opens into the lower zone via the opening 14. Air is pressed down into the lower zone, runs through the aerating medium in the middle zone and out through a valve 13 in the upper zone.

In addition, a cleaning water pipe with a nozzle may be arranged in the upper zone (not shown) where the nozzle is arranged to flush cleaning water under pressure against the aerating medium, in order to clean the aerating medium at intervals.

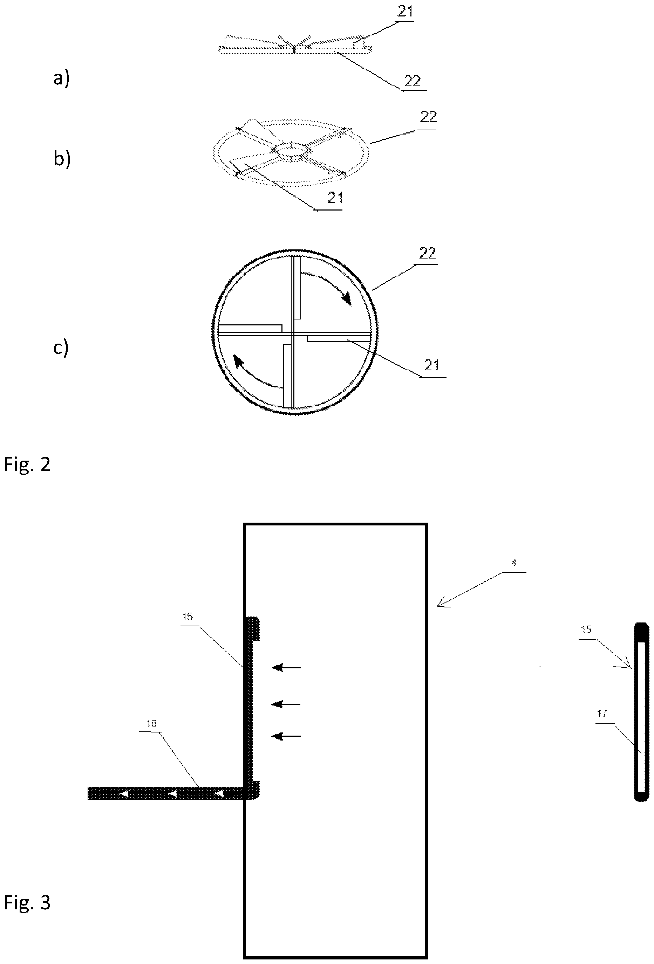

As mentioned, the water collects in the lower zone, and both in the breeding vessel itself and the aeration tank, foam will form which eventually settles on the surface of the water in the lower zone of the aeration tank. In the side wall of the aeration tank, there is arranged an extraction device 15 for the foam. Furthermore, an impeller or paddle 16 is arranged in the tank. As shown in Figure 2, the impeller 16 may be composed of one or more blades 21 arranged on a framework 22, the blades being arranged to be inclined relative to the framework which is parallel to the water level. The impeller 16 is arranged to float on the water in the aeration tank. Buoyancy can be provided by means of a float which can move vertically, and the movement can also be limited by upper and lower stops, which are for instance projections arranged on the inner surface of the aeration tank and/or on a possible central shaft in the aeration tank. Water falling from the central zone 7 drives the impeller or paddle 16 around and regulates the rotational speed of these parts of the device. The arrows indicate the direction of rotation. Rotation of the impeller or paddle 16 moves the foam towards the extraction device 15. In an alternative embodiment of the aeration tank, the impeller 16 can be driven by a motor.

As shown in figure 3, the at least one extraction device 15 is made as an elongate pipe in the side of the lower zone 8 of the air container. Here a sight glass (window) can also be arranged in order to be able to control the operation of the system. The extraction device has an elongate opening 17 on the side.

The foam is sucked out through the opening 17 and passed through the tube 18 to the foam trap 10. Suction can for instance be provided by means of a vacuum pump 20 arranged on top of the foam trap container. A valve 19 is arranged in the tube 18. The arrows show the direction which the foam follows into the extraction device and further through the tube 18 towards the foam trap.

When the aeration tank 4 is used to aerate the water, the water level becomes quite constant and allows the foam to be sucked out of the tank. When the tank has to be cleaned or the water level rises above the extraction device 15, the valve 19 may be closed or the vacuum pump 20 stopped, either manually or automatically. Foam can be removed periodically, to avoid affecting the aeration system.

The inlet and outlet of water in the aeration tank is controlled by a system comprising the pump 12 and valve(s) to be able to control the water level in the aeration tank. Usually the ratio of water entering and leaving the aeration tank will remain fairly constant, which ensures that the water level in the lower zone of the aeration tank is always kept within the operating range of the extraction device, i.e. within the elongate opening 17 in the tubular extraction device 15. It is usually sufficient to regulate the valves/pumps manually by observing the water level through a window/sight glass. However, the system may also include a level gauge which is used to automatically keep the water level at the correct level so that the foam enters the opening 17.

The foam trap system comprises a container to which the foam is transported. The foam is broken down in the foam trap system using common techniques. Foam treatment is performed by either physical or chemical methods. This is not known in the drawings.

Chemical treatment is carried out, for example, by adding one or more defoamers. By adding defoamers to the foam trap system, the amount of defoamers needed to treat the foam will be greatly reduced. Such treatment will also largely control the amount of defoamer added and will be able to keep such agents separate from the water in the farming vessel. It is preferred to use fast defoamers in this foam trap system, although slow defoamers may also be used, or a combination thereof.

Physical treatment may be performed, for example, by vacuum suction, physical breaking of the bubbles, etc.

For example, a spray nozzle may be arranged on the top wall of the container. Said spray nozzle sprays water on the foam to break it down.

Particular material, proteins that may be in the foam that is removed from the foam trap system and other interesting materials that may be in the foam from the foam trap system, can be isolated from the liquid that remains in the foam trap system after the foam has broken down. Such isolation of material contained in the liquid from the foam trap system can be performed in a conventional manner e.g. by filtration, centrifugation, flotation, flocculation, etc.

At the bottom of the foam trap container there may be an outlet to drain the water from the container.

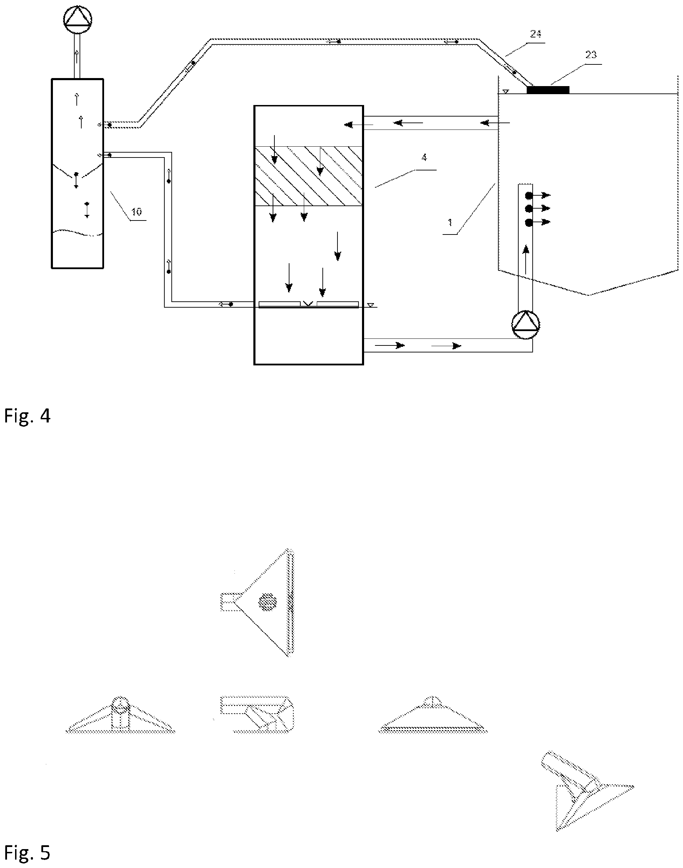

In an alternative embodiment, foam can additionally be retrieved directly from the breeding vessels as shown in Figure 4, where a liquid skimmer 23 takes surface foam from the breeding vessel into the foam trap system via the tube 24. In one embodiment the skimmer 23 is a tube having a shape adapted to catch the foam, as shown in Figure 5, for example a U or a V shape, and in the middle of it there is a foam extraction device, which is connected to the system for retrieving the foam. The system directs the foam from the breeding vessels to the foam trap system where the foam breaks down as explained above. Fig. 4 is simplified in the sense that it does not show all the valves included in the system, nor the extraction device. However, the system shown in Fig. 4 will comprise all such elements as shown in Fig. 1, with the addition of the skimmer which carries foam from the tank 1 to the foam trap 10. Likewise, a valve will be included in the pipe 24.

## Claims

1. A breeding farm for fish and other living aquatic organisms comprising a breeding vessel (1), a pipe (3) arranged to carry water from the breeding vessel (1) to an aeration tank (4), the water then being returned to the breeding vessel (1), the farm further comprising an extraction device (15) for foam from the farm, the extraction device (15) being mounted on the aeration tank, and where the foam is fed to a foam trap (10) where the foam is broken down,
wherein the aeration tank (4) is internally divided into three zones with an upper zone (7), middle zone (8) and lower zone (9), the upper zone being provided with an inlet for water from the breeding vessel, the middle zone comprises an aeration medium, the lower zone is provided with an outlet for water which is returned to the farming tank,
wherein the extraction device (15) is mounted in a side wall of the aeration tank (4) and comprises an elongate opening (17), and **characterized in that** the extraction device is connected to a pump (20) which creates negative pressure in the extraction device (15), as well as an impeller (16) floating on the water in the lower zone of the aeration tank, the impeller (16) being arranged to guide the foam towards the extraction device (15).

2. A breeding farm according to claim 1, wherein the impeller (16) is arranged to be affected by water which trickles down from the central zone and drives the impeller (16) around.

3. A breeding farm according to claim 1, wherein the impeller (16) is connected to a motor which drives the impeller around.

4. A breeding farm according to claim 1, wherein the inlet and outlet of water through the aeration tank is regulated by a mist pump (2) and/or valves (6) so that the water level in the lower zone of the aeration tank is kept within said elongate opening (17) in the extraction device (15).

## Patentansprüche

1. Zuchtfarm für Fische und andere lebende Wasserorganismen, umfassend einen Zuchtbehälter (1) und ein Rohr (3), dazu angeordnet, Wasser von dem Zuchtbehälter (1) zu einem Belüftungstank (4) zu leiten, wobei das Wasser dann in den Zuchtbehälter (1) zurückgeführt wird, die Farm ferner umfassend eine Absaugvorrichtung (15) für Schaum aus der Farm, wobei die Absaugvorrichtung (15) an dem Belüftungstank angebracht ist und wobei der Schaum einer Schaumfalle (10) zugeführt wird, in der der Schaum zersetzt wird,
wobei der Belüftungstank (4) innen in drei Zonen geteilt ist, mit einer oberen Zone (7), einer mittleren Zone (8) und einer unteren Zone (9), wobei die obere Zone mit einem Einlass für Wasser aus dem Zuchtbehälter versehen ist, die mittlere Zone ein Belüftungsmedium umfasst und die untere Zone mit einem Auslass für Wasser versehen ist, das in den Zuchttank zurückgeführt wird,
wobei die Absaugvorrichtung (15) in einer Seitenwand des Belüftungstanks (4) befestigt ist und eine längliche Öffnung (17) umfasst, und **dadurch gekennzeichnet, dass** die Absaugvorrichtung mit einer Pumpe (20) verbunden ist, die einen Unterdruck in der Absaugvorrichtung (15) erzeugt, sowie mit einem auf dem Wasser in der unteren Zone des Belüftungstanks schwimmenden Impeller (16), wobei der Impeller (16) dazu angeordnet ist, den Schaum in Richtung der Absaugvorrichtung (15) zu leiten.

2. Zuchtfarm nach Anspruch 1, wobei der Impeller (16) so angeordnet ist, dass er von Wasser beeinflusst wird, das aus der zentralen Zone herabtropft und den Impeller (16) antreibt.

3. Zuchtfarm nach Anspruch 1, wobei der Impeller (16) mit einem Motor verbunden ist, der den Impeller antreibt.

4. Zuchtfarm nach Anspruch 1, wobei der Einlass und der Auslass des Wassers durch den Belüftungstank so durch eine Nebelpumpe (2) und/oder durch Ventile (6) geregelt werden, dass der Wasserstand in der unteren Zone des Belüftungstanks innerhalb der länglichen Öffnung (17) in der Absaugvorrichtung (15) gehalten wird.

## Revendications

1. Ferme d'élevage pour poissons et autres organismes aquatiques vivants comprenant une cuve d'élevage (1), un tuyau (3) agencé pour transporter l'eau de la cuve d'élevage (1) vers un réservoir d'aération (4), l'eau étant ensuite renvoyée dans la cuve d'élevage (1), la ferme comprenant en outre un dispositif d'extraction (15) de la mousse provenant de la ferme, le dispositif d'extraction (15) étant monté sur le réservoir d'aération, et la mousse étant acheminée vers un piège à mousse (10) où la mousse est décomposée,
le réservoir d'aération (4) étant intérieurement divisé en trois zones avec une zone supérieure (7), une zone intermédiaire (8) et une zone inférieure (9), la zone supérieure étant pourvue d'une entrée pour l'eau provenant de la cuve d'élevage, la zone intermédiaire comprenant un milieu d'aération, la zone inférieure étant pourvue d'une sortie pour l'eau qui est renvoyée dans le réservoir d'élevage,
le dispositif d'extraction (15) étant monté dans une paroi latérale du réservoir d'aération (4) et comprenant une ouverture allongée (17), et **caractérisé en ce que** le dispositif d'extraction est relié à une pompe (20) qui crée une pression négative dans le dispositif d'extraction (15), ainsi qu'une roue à aubes (16) flottant sur l'eau dans la zone inférieure du réservoir d'aération, la roue à aubes (16) étant agencée pour guider la mousse vers le dispositif d'extraction (15).

2. Ferme d'élevage selon la revendication 1, la roue à aubes (16) étant agencée pour être affectée par l'eau qui s'écoule de la zone centrale et entraîne la roue à aubes (16).

3. Ferme d'élevage selon la revendication 1, la roue à aubes (16) étant reliée à un moteur qui entraîne la roue à aubes.

4. Ferme d'élevage selon la revendication 1, l'entrée et la sortie de l'eau à travers le réservoir d'aération étant régulées par une pompe à brouillard (2) et/ou des vannes (6) de sorte que le niveau d'eau dans la zone inférieure du réservoir d'aération soit maintenu dans ladite ouverture allongée (17) dans le dispositif d'extraction (15).
